# EUROPEAN PATENT SPECIFICATION

(11) **EP 0 343 673 B1**
(45) Date of publication and mention of the grant of the patent: **24.11.1993**
(21) Application number: 89109475.7
(22) Date of filing: 26.05.1989
(51) Int. Cl.: C01D 7/35

(54) **Method of production of extra light soda**
Verfahren zur Erzeugung von extraleichtem Natriumkarbonat
Procédé de production de carbonate de sodium extra-léger

(30) Priority: 27.05.1988 CS 3605/88; 15.03.1989 CS 1611/89
(43) Date of publication of application: 29.11.1989
(73) Proprietor: CESKOSLOVENSKA AKADEMIE VED, Praha 1 (CS)
(72) Inventor: Neuzil CSc, Lubomir, Doz.Ing., Praha 4 (CS); Bejcek CSc, Václav, Dipl.-Ing., Libusin (CS); Mocek, CSc, Karel, Dipl.-Ing., Praha 4 (CS); Koza CSc, Václav, Dipl.-Ing., Plzen (CS); Erdös, DrSc, Emerich, Doz. Dr. Ing., Praha 6 (CS); Wald, Jiri, Dipl.-Ing., Praha 6 (CS); Vlcek, Anton, Praha 6 (CS); Lippert CSc, Erich, Dipl.-Ing., Praha 10 (CS)
(74) Representative: Beetz & Partner Patentanwälte

(56) References cited:
- DE-A- 3 814 274

## Description

The invention relates to a method of production of extra light soda which can be used for removing admixtures from gaseous mixtures, especially of sulfur dioxide and nitrogen oxides.

For a dry method of removing the so-called acid components from gaseous mixtures, especially SO₂ or also SO₃, NOₓ, HCl, HF etc., it is possible to use a highly reactive form of sodium carbonate, hereinafter called an extra light soda. The up to now industrially produced sodium carbonate in the form of anhydrous sodium carbonate and crystalline dekahydrate of sodium carbonate are unsuitable for this purpose. The anhydrous sodium carbonates known as a dense soda ash or a light soda ash have very low reactivity and utilization degree. Dense soda ash is characterized by particle density of 2250 kgm⁻³ and bulk density of 950 to 1100 kgm⁻³, further by relatively low speed of solution in water, low absorption ability, and reactivity with SO₂ of max, 10%.

Industrially produced light soda ash shows more favorable particle density of 1300-1400 kgm⁻³, bulk density generally of 550 to 650 kgm⁻³, higher absorption ability and reactivity with SO₂ of up to about 60%.

The dekahydrate besides the same disadvantages moreover decomposes at temperatures above 32°C, respectively above 35.3°C to the heptahydrate, respectively to the monohydrate forming additionally an aqueous solution of sodium carbonate. Thereby a stickiness of the particles occurs causing either their mutual adhesion or their adhesion to the duct walls.

The extra light soda contrary to the above described types of soda has a particle density of 500-850 kgm⁻³, a bulk density of 300-500kgm⁻³ and a water content given by the relative molar fraction of water X_{W} in the range of 0.0 to 1.05. Its reactivity towards SO₂ is at least 90%.

Up to now various methods of production of a highly reactive form of sodium carbonate are known, the so-called active soda, which is formed by thermal decomposition of sodium hydrogencarbonate and of substances containing the sodium hydrogencarbonate, e.g. sodium sesquicarbonate, Wegscheiders salt or their mixtures. The decomposition must proceed under suitable conditions as for instance according to the Czechoslovak Discovery No. 26 or according to the US-A-4,588,569.

A disadvantage of the production of active soda from sodium hydrogencarbonate and from substances containing sodium hydrogencarbonate is the considerably high amount of carbon dioxide which develops not only during removing of the acid components from the gaseous mixture but also during the production of active soda.

According to a method disclosed in the US patent application Ser.No. 188,944 and DE-A-3814274 it is possible to produce extra light soda by drying of the dekahydrate of sodium carbonate at a temperature of the material not exceeding 32°C wherein the final steps of the drying process of the hydrate, corresponding to the pentahydrate or lower hydrates, are accomplished at temperatures higher than 32°C.

The object of this invention is to solve a problem of the excessive time and energy demand of the process of extra light soda production. It is based on the fact, that from the starting material containing a hydrate of sodium carbonate with a water content given by the relative molar fraction of water 7.5<X_{W}≦10.5 or its mixture with an aqueous solution of sodium carbonate, a hydrate of sodium carbonate with a water content X_{W}≦7.5 is prepared by means of thermal decomposition or by microwave radiation at temperatures of the material between 32 and 35.3°C or by drying at temperatures of the material up to 32°C. The hydrate obtained by this method is further dried at a temperature of the hydrate of not higher than 35.3°C down to a water content X_{W}≦4, whereafter this hydrate is again further dried at a temperature up to 450°C down to a water content X_{W}≦1.05. The relative molar fraction of water X_{W} is defined as the molar ratio of the amount of water to the amount of sodium carbonate.

The starting material can be either prepared by known procedures from various raw materials, e.g. sodium hydrogencarbonate, sodium sesquicarbonate, anhydrous soda/soda ash/, Wegscheiders salt or it can be of natural origin with a content of mineral and/or organic admixtures.

Another object of the invention is a combination of a process of the production of the extra light soda with a process for removing components from gaseous mixtures.

The thermal decomposition of the starting material can be performed through heating by the surrounding medium of a temperature of at least 50°C or by electrical resistance under the formation of a suspension of solid sodium carbonate heptahydrate and an aqueous solution of sodium carbonate up to a temperature of the suspension in the range between 32.1 and 35.3°C, whereafter the suspension is separated at temperatures in the range between 32 and 35°C, thus obtaining a solid hydrate of sodium carbonate with a water content X_{W}≦7.5.

The hydrate of sodium carbonate with a water content X_{W}≦7.5 can be prepared with advantage in such a way, that the solid starting material with a water content X_{W}≦10.5 is mixed with a saturated aqueous solution of sodium carbonate in a minimal volume ratio of 4 parts of solution and 6 parts of the starting material. Thereby an easy mixing procedure and also a pronounced heat transfer is enabled by which the decomposition takes place in a much shorter time. The mixture is thermally decomposed by an external heat supply at a temperature of the surroundings of at least 50°C. The formed hydrate of sodium carbonate with a water content X_{W}≦7.5 is separated from the sodium carbonate solution, whereby the separated solution can be repeatedly used for mixing with the starting material or for the production of sodium carbonate hydrate with a water content 7.5<X_{W}≦10.5. The mentioned mixture of at least 4 volumes of solution and 6 volumes of the starting material can be formed during the preparation of the starting material by crystallization in such a way, that the crystals are allowed to settle and a part of the solution is separated in an amount just to obtain the required ratio.

A considerable advantage of the way according to the invention is the drying of the sodium carbonate hydrate with a water content 4<X_{W}≦7.5 at a temperature up to 35.3°C especially in the range of higher relative moisture contents of the air. In contrast to the drying at temperatures up to 32°C the driving force of the process can be considerably increased, which leads to a decrease of the drying time and thus to a lowering of the capital and operation costs.

A pronounced lowering of the energy consumption is, according to the invention, achieved by thermal or microwave decomposition of the starting material with a water content in the range 7.5<X_{W}≦10.5 down to the heptahydrate under the simultaneous formation of a saturated aqueous solution of sodium carbonate, because the energy consumption required for the dehydration through water release during the simultaneous formation of the solution makes 6% at the most of the energy consumption needed for the same water content decrease by drying. The overall energy consumption for the production of the extra light soda according to the invention can be lowered at least by 70% in comparison with the drying of the starting material in a stream of drying gas down to anhydrous sodium carbonate. An analogous relation holds also for the time of drying and thus also for the dimension of the equipment and for the capital costs.

The preparation of sodium carbonate hydrate with a water content X_{W}≦7.5 from a starting material by drying is in question in those cases, where a simple arrangement of the equipment is required, i.e. for smaller shops, because the manipulation with the solution is avoided which is formed during the thermal or microwave decomposition of the starting material. Finishing the drying process of the starting material by a drying gas at a temperature of the dried material up to 450°C down to a water content X_{W} equal about zero, can be advantageous during the production of the extra light soda in those cases, when the gaseous mixture containing the captured admixture has a temperature lower than 100°C or when it would be too expensive to transport the water of the sodium carbonate hydrate to great distances.

The drying of the sodium carbonate hydrate according to the invention can be performed with advantage in a fluidized bed, where the velocity of the drying medium is at least a 1.5 multiple of the minimum fluidization velocity of the starting material and where the temperature of the dried material is 32°C at most. For reasons of an intensive mixing of the particles of the dried material and thus a high intensity of heat and mass exchange it is possible to feed the drying gas at a temperature considerably exceeding the temperature of decomposition of the sodium carbonate hydrates of 32-35.3°C, without a solution being formed, and thus avoiding an adhesion of the particles either together or to the walls of the equipment.

The drying of the starting material can be also performed during storage in an aerated silo with a bed height of the starting material not exceeding 10m, a linear velocity of the air of at least 0.05 ms⁻¹ and a temperature of the material of not higher than 32°C.

In this way it is possible according to the invention to take advantage of the storing of the starting material for its relatively cheap predrying. The material is released from the silo either continuously or by cycles, whereby at the same time the silo is continuously refilled with the fresh starting material to a height of 10 m maximally. A similar effect of predrying can be achieved by storing the starting material on roofed heaps or in open containers with a bed height up to 5m. The air passing around the heaps or flowing through them or through the containers must have a temperature under which the temperature of the material does not exceed 32°C and a velocity above 0.1 ms⁻¹.

The final stages of drying can be accomplished with advantage by feeding the sodium carbonate hydrate with a water content X_{W}≦4 into a gas mixture containing the removed admixture by a temperature of the hydrate up to 450°C. In this method the formed extra light soda removes immediately the admixture. By this procedure a pronounced shortening of the production time of the sodium carbonate is achieved. The material can be fed into gas mixtures of a temperature up to about 450°C which considerably lowers the capital costs and also the costs for energy necessary for removing the water from the hydrate by drying, because the waste gas mixture containing the removed component, e.g. flue gases, usually has a temperature above 100°C which represents a source of the so-called waste heat. Thereby the water, which is at X_{W}≦4 bound more strongly, requires for dehydration a hihger energy consumption per one mole of water. In this way the remaining water, according to the invention, is removed without energy demands by the waste heat.

The combination of a final drying step involving drying sodium carbonate having a water content in the range of 1.05<X_{W}≦4 with the process of removing admixtures from gases has following advantages.

The material of said water content has a higher mechanical consistence which favourably influences the transporting and manipulation. Also the content of dust is lower.

If consolidation of the surface occurs either through transport or by various manipulation as e.g. by desintegration /for purposes of dry injection/ with a consequence of activity decrease, then by the influence of the residual water during its escape in the technological unit at temperatures above 100°C a repeated increase of the activity appears, i.e. a reactivation of the material takes place.

The material with the mentioned residual water is fed with advantage into the technological unit in which the gas temperature lies above 100°C also for the reason that by the so-called waste heat the final dehydration is immediately followed by the removal of the acid components from the gas. Thus a pronounced cheapening of the material preparation outside of the technological unit is achieved.

A problem are the transport costs of the ballast water of the desulfurization medium, which is necessary to optimize with respect to the transport distance.

By using a medium with residual water prepared at lower temperature, a lowering of its price and thus also a lowering of the costs for removing admixtures from gases are achieved.

The material with residual water is not hygroscopic, thus avoiding the necessity of special and expensive wrappings and laborous manipulation with it.

By practical realization of various alternatives of the extra light soda production according to the invention a highly porous and thus a highly reactive sodium carbonate is formed. The reactivity and the utilization degree /conversion/ of the formed sodium carbonate were tested by removing sulphur dioxide from a mixture with humid air above 100°C in a batch reactor after achieving a molar ratio of the fed sulfur dioxide to the original amount of sodium carbonate equal to unity, NSR = 1, the obtained mean value of the gas desulphurization efficiency exceeded 95%, whereby the degree of conversion of the solid sodium carbonate was higher than 90%. The utilisation of the sodium carbonate - extra light soda was above 93% up to 99%.

The method of production of the extra light soda according to the invention can be realized in one step discontinuously with a gradual temperature increase in correspondence with the water content decrease or also discontinuously in batch, continuous or combined processes in more steps arranged in series with a stepwise increase of the temperature in the individual units in correspondence with the water content of the treated sodium carbonate hydrate.

The use of the extra light soda produced according to this invention is not limited to the field of removing admixtures from gaseous mixtures. It can be utilized in connection with any process or product where a soda with high porosity of particles and low bulk density is required, e.g. as an additive to solid detergents or where a soda with high adsorption ability should be applied.

The method according to the invention is demonstrated by the way of the following examples.

The best embodiment of the invention is disclosed in the Example 2 as far as the production of extra light soda is concerned and moreover in the Examples 12 and 13, which are directed to the process of removing of SO₂ and NOₓ.

### Example 1

In a box drier maintained at a temperature of 80°C, 3 kg of the starting material (hydrate of sodium carbonate) with a water content X_{W}= 9.8 was heated. The material had a particle size up to 2 mm with a mean size of 0.8 mm. After 10 minutes the material in the drier began to decompose under the formation of a solution and thus of a suspension of a temperature of 32.1°C. After 80 minutes the temperature of the suspension was 33.7°C; it was removed from the drier and filtered. The filtrate contained 32 % sodium carbonate by mass. The yield of the crystals was 1.30 kg, i.e. 41% of the original input, their crystal water content was X_{W}=7.05.

This material in an amount of 0.75 kg was further dried in a fluidization cylindrical batch drier of 200 mm diameter with a conical section above the grid. The superficial velocity of the air at grid level was 1.2 ms⁻¹ and the partial pressure of water vapour at the entry was 1010 Pa.

The temperature of the material being dried was kept within the range of 34 and 35°C. The temperature of drying medium (air) varied between 65 and 70°C. After 18 minutes of drying when the water content of the hydrate was X_{W}=3.5, the temperature of the air was increased to 120°C and after 26 minutes the temperature of the material reached 118°C. In this phase the process of drying was finished. The water content in the material obtained X_{W} was practically zero. Its bulk density was 350 kgm⁻³ in comparison with 820 kgm⁻³ of the starting material.

The behaviour of the obtained material - extra light soda in contact with air containing an admixture of sulfur dioxide was tested by placing 300g of the material in a fluidized bed batch reactor of 150 mm diameter. The temperature of the mixture of humid air and sulfur dioxide was 140°C. the concentration of sulfur dioxide was 0.2% by vol.; the partial pressure of water vapour was 1010 Pa; the superficial gas velocity was four times higher than the minimum velocity of fluidization. After 240 minutes the molar ratio of the amounts of sulfur dioxide and of the original amount of sodium carbonate reached the value of unity. At this moment the average degree of sulfur dioxide removal was 97.5 %. The conversion of the solid amounted up to 95%.

### Example 2

An amount of 2 kg of sodium carbonate with a water content X_{W}=9.8 was mixed with 1.2 kg of a solution obtained during the filtration process according to Example 1. The suspension was placed in a box drier. The suspension was heated and occasionally mixed and the temperature in the drier was kept at a value of 85°C. After 45 minutes, after the temperature of the suspension reached the value of 34°C, the suspension was removed from the drier and filtered off The filtrate had a concentration of 32.5% by mass of sodium carbonate. The yield of crystals was 0.72 kg, i.e. 36% of the original amount, their water content was X_{W}=7.05.

This material in an amount of 0.75 kg was dried in a fluidized bed batch drier of the same type as in Example 1. The superficial air velocity at grid level was 1.2 ms⁻¹; the partial pressure of water vapour in the air was 960 Pa The temperature of the material being dried was kept between 32 and 34°C, the temperature of drying air varied between 59 and 66°C. After 32 minutes the drying was finished. The water content of the extra light soda material was X_{W}=1.05.

This material in an amount of 0.3 kg was subjected to the action of air with an admixture of sulfur dioxide and water vapour in the same equipment as in Example 1. The temperature of the gaseous mixture was 142°C, the water vapour pressure 960 Pa, the sulfur dioxide concentration 0.19% by vol. and the superficial velocity of the gas was four times the minimum velocity of fluidization. After 195 minutes the relative molar ratio of the feeded sulfur dioxide and of the original amount of sodium carbonate reached the value of unity. At this moment the average desulfurization degree was 96.5% and the conversion degree of the solid amounted up to 94%.

### Example 3

A hydrate of sodium carbonate with a water content X_{W}= 3.9 in an amount of 2.3 kg and a layer thickness of 0.05 m was exposed for 1.1 minutes to a microwave radiation of a frequency of 2450 MHz and an intensity of energy flow of 5.5 kWm⁻². After this time a suspension of crystals and of a solution of a temperature of 34°C was formed. Outside of the space with the microwave radiation the suspension was filtered off according to Example 1. The concentration of sodium carbonate in the filtrate was 32.5% by mass. The yield of crystals was 1.0 kg, i.e. 38% of the original amount. The water content of the crystals was X_{W}=7.2.

This material was dried and used according to Example 1 for desulfurization purposes. The same results as in Example 1 were obtained.

### Example 4

A hydrate of sodium carbonate of a particle size in the range between 1.0 and 2.5 mm in an amount of 0.75 kg, a water content X_{W}=10.1 and with a bulk density of 810 kgm⁻³ was dried in a fluidized bed batch drier according to Example 1 with air of a superficial velocity of 1.2ms⁻¹ at grid level and with a partial pressure of water vapour of 890 Pa. First the temperature of the material being dried was maintained in the range of 30-31.8°C for 17 minutes during which the water content sank to X_{W}=6.8. After that the temperature of the material was kept at a value of 34 ± 1°C for 13 minutes which caused a decrease of the water content to X_{W}=3.8. Then the temperature of the fluidizing gas was increased to 150°C. After 40 minutes from the beginning the temperature of the material being dried reached 140°C and the drying process was finished. The water content X_{W} of the extra light soda material was practically zero and its bulk density was 340 kgm⁻³.

This material was used for removing sulfur dioxide from a mixture with humid air under identical conditions as in Example 1. The average desulfurization degree of the gas was 98%, the conversion degree of the solid reached a value of 94.5%.

### Example 5

A hydrate of sodium carbonate with a water content of X_{W}=9.8 was placed into a vertical insulated tube of 200 mm diameter and 2 m height. The filling of the tube formed a bed of 2 m height and equalled to 45 kg of the starting material. From the bottom of the tube air with a temperature of 25°C and with a partial water vapour pressure of 980 Pa was led into it. The superficial (air) velocity was 0.1 ms⁻¹ From the bottom of tube twice a day portions of the material were taken corresponding to 0.1 m height and through the top of the tube the removed material was replaced by the fresh starting material to the original height of 2.0 m. The removed portions were analyzed with respect to their water content. In a time span of 6 days the water content of the removed material was X_{W}=3.1 and did not practically change any more. the bulk density of this material was 480 kgm⁻³.

This material was further dried in a fluidized bed batch drier according to Example 1 and thus obtained extra light soda thereafter used for removal of sulfur dioxide from a mixture with humid air with identical parameters as in Example 1. The average desulfurization degree of the gas mixture achieved was 97.5% and the conversion degree of the solid amounted up to 94.5%.

### Example 6

A hydrate of sodium carbonate with a water content X_{W}=10.1 and of 5 kg amount was placed on a horizontal bed, thus forming a heap of a conical shape with a height of 0.13 m and a diameter of 0.43 m at the base. Around the heap air was streaming with a velocity of 0.1 ms⁻¹, a temperature of 25°C and with a partial water vapour pressure of 1050 Pa. Twice a day the heap was mixed. After five days an average value of the water content X_{W}=5.2 was found.

This material, in this way predried, was further dried and used for removal of sulfur dioxide from a mixture with humid air with identical characteristics as in Example 1. An average degree of desulfurization equal to 97% was reached The conversion of the solid phase was 94.5%.

### Example 7

According to the procedure shown in the first part of Example 1 a hydrate of sodium carbonate with a water content X_{W}=7.1 was prepared by thermal decomposition and subsequent filtration. This material of 0.75 kg amount was thereafter dried in a fluidized bed batch drier according to Example 1. The temperature of the material being dried was kept between 32 and 34°C. After 14 minutes the drying process was finished. The water content of the material X_{W}=3.8 was found.

The material, prepared in this method, was used in an amount of 0.3 kg for removal of sulfur dioxide from a mixture with humid air under identical conditions as in Example 1. After 145 minutes, when the relative molar ratio of the feeded sulfur dioxide to the original amount of sodium carbonate reached the value of unity, an average desulfurization degree of the gas mixture 95.5% was found. The conversion degree of the solid phase reached a value of 94%.

### Example 8

A sodium carbonate hydrate with a water content X_{W}= 3.8 prepared according to Example 4 was further dried at a temperature of 450°C for 5 minutes. Thereafter the drying process was finished. The water content of the dried extra light soda material was practically zero (X_{W}=0), its bulk density equalled to 345 kgm⁻³.

Under conditions according to Example 1 an average degree of gas desulfurization 95% was achieved together with 91% degree of solid phase conversion.

### Example 9

Sodium carbonate of 1 kg amount with a water content X_{W}=3.8 prepared from a starting material with a water content X_{W}=9.8 by drying at a temperature of the material being 26°C was further dried in a fluidization batch drier of 200 mm diameter with a conical section above the grid. The superficial air velocity at grid level was 1.5ms⁻¹ and the partial water vapour pressure at the drier inlet was 1100 Pa. The temperature of the material being dried was maintained at 40°C, the temperature of the air used for drying was between 82 and 94°C. After 15 minutes of drying when the water content of the hydrate reached X_{W}=1.08, the process was finished. The bulk density of the obtained material was 405 kgm⁻³ compared with 560 kgm⁻³ of the material with a water content X_{W}=3.8.

The material obtained in this way was used for desulfurization of humid air with an admixture of sulfur dioxide by placing 300 g of the material into a fluidized bed batch reactor of 150 mm diameter. The temperature of the mixture of humid air and sulfur dioxide was 140°C, the concentration of sulfure dioxide was 0.2% by vol., the water vapour pressure was 1100 Pa and the superficial velocity was twice higher than the minimum fluidization velocity. After 240 minutes the relative molar ratio of the sulfur dioxide and sodium carbonate amounts was equal to unity. At this moment the average value of the desulfurization of the gas was 95%. The conversion of the solid reached at the same time the value of 93.5%.

### Example 10

A granular material prepared according to Example 9 by drying a material of an average particle size of 0.8 mm, but with a water content X_{W}=4 was used in an amount of 360 g for removing sulfur dioxide from a mixture with humid air in a reactor according to Example 1. The temperature of the gas mixture was 150°C, the partial water vapour pressure was 1100 Pa, the concentration of sulfur dioxide 0.18% by vol. The superficial velocity of the gas was a 3.8 multiple of the minimum fluidization velocity. After 280 minutes the relative molar ratio of the sulfur dioxide and sodium carbonate amounts was equal to unity. The average value of the degree of sulfur dioxide removal from the gas was 97%. The degree of conversion of the solid reached 94%. The solid phase represented a mixture of sodium sulfite, sulfate and of the unreacted carbonate.

### Example 11

A material prepared according to Example 9 in an amount of 0.5 kg with a water content of X_{W}=2 was used for removal of sulfur dioxide from a mixture with humid air at a temperature of 150°C, with a partial water vapour pressure of 900 Pa with a concentration of sulfur dioxide of 0.2% by vol. The apparatus for sulfur dioxide removal consisted of a vertical tube of 50 mm diameter and 3 m length. It was equipped with a multiorifice grid with holes of 1 mm diameter and a relative free area of 28%. Further the apparatus was equipped with a cyclone, a filter and also with an installation enabling to return continuously particles caught in the cyclone back into the space above the grid. Thus a circulating fluidized bed was formed. The hydrate of sodium carbonate was fed into the space above the grid where a mixture of humid air and sulfur dioxide flew through the tube, cyclone and filter with a velocity of 3.05 ms⁻¹. This velocity equalled to 95% of the elutriation velocity of an isolated carbonate particle (dₚ=0.8mm). After three hours, when the average degree of sulfur dioxide removal from the air was 95%, the relative molar ratio of the sulfur dioxide and the original sodium carbonate amounts was 1.06. The conversion degree of the solid was 93%.

### Example 12

The hydrate of sodium carbonate according to Example 9 with a water content X_{W}=1.8 was desintegrated to particles of an average size of 65 µm. Thereafter it was used for removing sulfur dioxide from a mixture with moist air in an equipment according to Example 11 which was modified in such a way, that the solid material caught in the cyclone and filter was not returned into the space above the grid, but instead the fresh solid hydrate was continually injected into this space. A mixture of air, sulfur dioxide and water vapour was led from the bottom into the tube and thus into the space below the grid with a velocity of 0.15 ms⁻¹. The temperature of the gas was 150°C, the sulfur dioxide concentration 0.2% by vol. and the partial water vapour pressure 1100 Pa. The velocity of 0.15 ms⁻¹ corresponded approximately to the double of the elutriation velocity of the particles of the hydrate of sodium carbonate. The feeding rate of the hydrate into the space above the grid was 0.14 gmin⁻¹. The molar ratio of the flow rates of the sulfur dioxide and hydrate amounts into the space above the grid was 1.03. The degree of sulfur dioxide removal from the gas mixture during the whole time of operation did not fall below 90%.

### Example 13

A material prepared according to Example 9 in an amount of 0.35 kg with a water content X_{W}=2 was used for removal of nitrogen oxides from a mixture with humid air. The temperature of the gas was 130°C, the partial water vapour pressure 2000 Pa and a concentration of nitrogen dioxide 0.075% by vol. The equipment was a fluidized bed batch reactor, the same as in Example 9. The superficial gas velocity was a 1.8 multiple of the minimum velocity of fluidization. After 120 minutes the relative molar ratio of the nitrogen oxides (expressed as NO₂) to the original hydrate amounts reached the value of unity. At this moment the degree of conversion of the solid reached 48.5%. The analysis of the solid phase after the reaction showed a ratio of the sodium nitrate higher than 10.

## Claims

1. Method of production of an extra light soda suitable for removing admixtures from gases, especially such as sulfur dioxide and nitrogen oxides, using a starting material which comprises sodium carbonate hydrate of a water content given by the relative molar ratio of the water 7.5<X_{W}≦10.5 or its mixture with an aqueous solution of sodium carbonate, which comprises:
reducing the water content of the hydrate to X_{W}≦7.5, either, by exposing the starting material to a thermal decomposition with a subsequent separation of a solid hydrate at a temperature of the hydrate of 32-35.3°C,
or to a microwave radiation at a temperature of the hydrate of 32-35.3°C,
or by drying the starting material at a temperature of the hydrate of up to 32°C,
further drying the hydrate of the water content X_{W}≦7.5 at a temperature of the hydrate of up to 35.3°C to produce a hydrate of a water content X_{W}≦4, and
drying the hydrate of the water content X_{W}≦4 at a temperature of the hydrate of up to 450°C to produce sodium carbonate of a water content X_{W}≦1.05.

2. Method according to Claim 1, wherein the thermal decomposition of the starting material is accomplished through heating by a surrounding medium of a temperature of at least 50°C, to cause formation of a suspension of a solid sodium carbonate heptahydrate and an aqueous solution of sodium carbonate of a temperature in a range of 32.1-35.3°C whereupon the solid sodium carbonate hydrate with X_{W}≦7.5 is separated under the same temperature range of 32-35°C.

3. Method according to Claims 1 and 2, wherein the starting material used for the thermal decomposition is a mixture of a solid sodium carbonate hydrate and its saturated aqueous solution, the composition of which corresponds at least to 4 volumes of the solution and maximally to 6 volumes of the hydrate.

4. Method according to Claim 1, wherein the predrying of the starting material is performed during storage in an aerated silo with a bed height of the starting material of maximally 10 m, during which the linear velocity of the air is at least 0.05 ms⁻¹ and where the temperature of the material is not higher than 32°C.

5. Method according to Claim 1, wherein the predrying of the starting material is performed during its storage in roofed heaps or in roofed open containers with a bed height of up to 5 m, with the air flowing around the heaps or through the bed in the container with a velocity above 0.1ms⁻¹ and where the temperature of the material does not exceed 32°C.

6. Method according to Claim 1, wherein the predrying of the starting materials and the hydrates is performed in a fluidized bed at a velocity of a drying medium of at least 1.5 times higher than a minimum velocity of the fluidization of the starting material and the hydrates and where the temperature of the dried material is 32°C at most.

7. Method according to Claim 1, wherein the sodium carbonate hydrate with a water content 1.05<X_{W}≦4 is dried by placing it into a gaseous mixture having a temperature above 100°C containing the admixture to be removed.

8. Method according to Claim 7, wherein the hydrate of water content X_{W}≦4 is led into the rising part of a circulating fluidized bed of sodium carbonate particles at a gas velocity at least equal to the 0.95 multiple of the elutriation velocity of the particles, whereby the particles of sodium carbonate leaving the rising part of the circulating fluidized bed are separated and returned back to the bottom of the rising part of the circulating fluidized bed, or a portion of the separated particles is replaced by the fresh hydrate.

9. Method according to Claim 7, wherein the sodium carbonate hydrate is used in a desintegrated form with particles smaller than 100 µm at gas velocities at least equal to the double of the elutriation velocity of the particles.

## Patentansprüche

1. Verfahren zur Erzeugung von extraleichtem Natriumkarbonat mit Eignung zum Entfernen von Beimischungen aus Gasen, insbesondere solchen wie Schwefeldioxid und Stickoxiden, unter Verwendung eines Ausgangsmaterials, das Natriumkarbonathydrat eines durch das relative Molverhältnis des Wassers von 7,5 < X_{W} ≦ 10,5 gegebenen Wassergehalts oder dessen Mischung mit einer wässerigen Natriumkarbonatlösung aufweist, welches vorsieht:
Verringerung des Wassergehalts des Hydrats auf X_{W} ≦ 7,5 durch Aussetzen des Ausgangsmaterials entweder einer thermischen Zersetzung mit nachfolgender Abtrennung eines festen Hydrats bei einer Temperatur des Hydrats von 32 - 35,3 °C,
oder einer Mikrowellenbestrahlung bei einer Temperatur des Hydrats von 32 - 35,3 °C,
oder durch Trocknen des Ausgangsmaterials bei einer Temperatur des Hydrats bis zu 32 °C,
weitere Trocknung des Hydrats des Wassergehalts X_{W} ≦ 7,5 bei einer Temperatur des Hydrats bis zu 35,3 °C zum Erzeugen eines Hydrats eines Wassergehalts X_{W} ≦ 4,
und
Trocknung des Hydrats des Wassergehalts X_{W} ≦ 4 bei einer Temperatur des Hydrats bis zu 450 °C zum Erzeugen von Natriumkarbonat eines Wassergehalts X_{W} ≦ 1,05.

2. Verfahren nach Anspruch 1, bei dem man die thermische Zersetzung des Ausgangsmaterials mittels Erhitzung durch ein umgebendes Medium einer Temperatur von wenigstens 50 °C zum Bewirken einer Bildung einer Suspension eines festen Natriumkarbonatheptahydrats und einer wässerigen Natriumkarbonatlösung einer Temperatur in einem Bereich von 32,1 - 35,3 °C vornimmt, wonach das feste Natriumkarbonathydrat mit X_{W} ≦ 7,5 unter dem gleichen Temperaturbereich von 32 - 35 °C abgetrennt wird.

3. Verfahren nach den Ansprüchen 1 und 2, bei dem das für die thermische Zersetzung verwendete Ausgangsmaterial eine Mischung eines festen Natriumkarbonathydrats und seiner gesättigten wässerigen Lösung ist, deren Zusammensetzung wenigstens 4 Volumina der Lösung und maximal 6 Volumina des Hydrats entspricht.

4. Verfahren nach Anspruch 1, bei dem man die Vortrocknung des Ausgangsmaterials während einer Lagerung in einem belüfteten Silo mit einer Betthöhe des Ausgangsmaterials von maximal 10 m durchführt, während der die lineare Geschwindigkeit der Luft wenigstens 0,05 ms⁻¹ ist und wo die Temperatur des Materials nicht höher als 32 °C ist.

5. Verfahren nach Anspruch 1, bei dem man die Vortrocknung des Ausgangsmaterials während seiner Lagerung in überdachten Haufen oder in überdachten offenen Behältern mit einer Betthöhe bis zu 5 m durchführt, wobei die Luft um die Haufen oder durch das Bett im Behälter mit einer Geschwindigkeit über 0,1 ms⁻¹ strömt und wo die Temperatur des Materials 32 °C nicht übersteigt.

6. Verfahren nach Anspruch 1, bei dem man die Vortrocknung der Ausgangsmaterialien und der Hydrate in einer Wirbelschicht bei einer Geschwindigkeit eines Trocknungsmediums durchführt, die wenigstens 1,5-fach höher als eine Mindestgeschwindigkeit der Fluidisierung des Ausgangsmaterials und der Hydrate ist und wo die Temperatur des getrockneten Materials höchstens 32 °C ist.

7. Verfahren nach Anspruch 1, bei dem das Natriumkarbonathydrat mit einem Wassergehalt 1,05 < X_{W} ≦ 4 getrocknet wird, indem man es in eine gasförmige Mischung mit einer Temperatur über 100 °C, die die zu entfernende Beimischung enthält, einbringt.

8. Verfahren nach Anspruch 7, bei dem das Hydrat des Wassergehalts X_{W} ≦ 4 in den steigenden Teil einer zirkulierenden Wirbelschicht von Natriumkarbonatteilchen bei einer Gasgeschwindigkeit von wenigstens dem 0,95-Vielfachen der Auswaschungsgeschwindigkeit der Teilchen einführt, wodurch die den steigenden Teil der zirkulierenden Wirbelschicht verlassenden Natriumkarbonatteilchen abgetrennt und zum Boden des steigenden Teils der zirkulierenden Wirbelschicht zurückgeführt werden oder ein Teil der abgetrennten Teilchen durch das frische Hydrat ersetzt wird.

9. Verfahren nach Anspruch 7, in dem das Natriumkarbonathydrat in unterteilter Form mit Teilchen unter 100 µm bei Gasgeschwindigkeiten von wenigstens dem Doppelten der Auswaschungsgeschwindigkeit der Teilchen verwendet wird.

## Revendications

1. Procédé de production d'un carbonate de sodium ultraléger approprié pour la séparation de mélanges de gaz, tels que par exemple dioxyde de soufre et oxydes d'azote, en utilisant un produit de départ qui comprend du carbonate de sodium hydraté d'une teneur en eau, exprimée par la proportion molaire relative de l'eau, satisfaisant la relation 7,5 < X_{W} ≦ 10,5 ou son mélange avec une solution aqueuse de carbonate de sodium, qui comprend :
la réduction de la teneur en eau de l'hydrate à X_{W} ≦ 7,5,
soit par exposition du produit de départ à une décomposition thermique avec une séparation ultérieure d'un hydrate solide à une température de l'hydrate de 32-35,3°C,
ou à un rayonnement de micro-ondes à une température de l'hydrate de 32-35,3°C,
ou par séchage du produit de départ à une température de l'hydrate allant jusqu'à 32°C,
le séchage ultérieur de l'hydrate de teneur en eau X_{W} ≦ 7,5 à une température de l'hydrate allant jusqu'à 35,3°C pour produire un hydrate d'une teneur en eau X_{W} ≦ 4 et
le séchage de l'hydrate d'une teneur en eau X_{W} ≦ 4 à une température de l'hydrate allant jusqu'à 450°C pour produire du carbonate de sodium d'une teneur en eau X_{W} ≦ 1,05.

2. Procédé selon la revendication 1, dans lequel la décomposition thermique du produit de départ est effectuée par chauffage par un milieu environnant d'une température d'au moins 50°C, pour produire la formation d'une suspension d'un carbonate de sodium heptahydraté solide et d'une solution aqueuse de carbonate de sodium d'une température dans la gamme de 32,1-35,3°C, après quoi le carbonate de sodium hydraté solide à X_{W} ≦ 7,5 est séparé à la même température dans la gamme de 32-35°C.

3. Procédé selon les revendications 1 et 2, dans lequel le produit de départ utilisé pour la décomposition thermique est un mélange d'un carbonate de sodium hydraté solide et de sa solution aqueuse saturée, dont la composition correspond au moins à 4 volumes de la solution et au maximum à 6 volumes de l'hydrate.

4. Procédé selon la revendication 1, dans lequel le séchage préalable du produit de départ est effectué pendant le stockage dans un silo aéré avec une hauteur de lit du produit de départ de 10 m maximum, pendant lequel la vitesse linéaire de l'air est d'au moins 0,05 m.s⁻¹ et où la température du produit n'est pas supérieure à 32°C.

5. Procédé selon la revendication 1, dans lequel le séchage préalable du produit de départ est effectué pendant son stockage en tas couverts ou dans des récipients ouverts couverts avec une hauteur de lit jusqu'à 5 m, avec circulation de l'air autour des tas ou à travers le lit dans le récipient à une vitesse de plus de 0,1 m.s⁻¹ et où la température du produit ne dépasse pas 32°C.

6. Procédé selon la revendication 1, dans leque le séchage préalable du produit de départ et des hydrates est effectué dans un lit fluidisé à une vitesse d'un milieu de séchage d'au moins 1,5 fois supérieure à la vitesse minimale de la fluidisation du produit de départ et des hydrates et où la température du produit séché est au plus de 32°C.

7. Procédé selon la revendication 1, dans lequel on sèche le carbonate de sodium hydraté d'une teneur en eau satisfaisant la relation 1,05 ≦ X_{W} ≦ 4 en le plaçant dans un mélange gazeux ayant une température de plus de 100°C contenant le mélange à séparer.

8. Procédé selon la revendication 7, dans lequel on envoie l'hydrate d'une teneur en eau X_{W} ≦ 4 dans la partie ascendante d'un lit fluidisé en circulation de particules de carbonate de sodium à une vitesse du gaz au moins égale à 0,95 fois la vitesse d'élutriation des particules, les particules de carbonate de sodium quittant la partie ascendante du lit fluidisé en circulation étant ainsi séparées et renvoyées dans le bas de la partie ascendante du lit fluidisé en circulation, ou bien une portion des particules séparées étant remplacée par de l'hydrate frais.

9. Procédé selon la revendication 7, dans lequel le carbonate de sodium hydraté est utilisé sous une forme broyée en particules de moins de 100 µm à des vitesses du gaz au moins égales au double de la vitesse d'élutriation des particules.
